# EUROPEAN PATENT APPLICATION

(11) **EP 1 213 887 A1**
(43) Date of publication of application: **12.06.2002**
(21) Application number: 01950047.9
(22) Date of filing: 24.07.2001
(51) Int. Cl.: H04L 27/00, H04B 1/38

(54) **RADIO COMMUNICATION APPARATUS AND RADIO COMMUNICATION METHOD**

(30) Priority: 24.07.2000 JP 2000222435
(71) Applicant: MATSUSHITA ELECTRIC INDUSTRIAL CO., LTD., Kadoma-shi, Osaka 571-8501 (JP)
(72) Inventor: YAMAGUCHI, Manabu, Yokohama-shi, Kanagawa 232-0061 (JP); OBARA, Toshio, Kawasaki-shi, Kanagawa 212-0025 (JP)
(74) Representative: Grünecker, Kinkeldey, Stockmair & Schwanhäusser Anwaltssozietät
(86) International application number: JP0106387
(87) International publication number: WO0209378

(57) **Abstract**

There is provided a radio communication apparatus and a radio communication method in which a transmission mixer and a reception mixer are shared in mobile communication systems each having a different frequency band without using frequency switching means for frequency synthesizers to make it possible to improve miniaturization of the apparatus. At the transmitting side, transmission IF values of f11 and f12 (f11=f12) are set to frequencies close to (ft1-ft2)/2, and a lower local configuration is formed in the first system and an upper local configuration is formed in the second system using the frequency lower than that of the first system. At the receiving side, values of f41 and f42 (f41=f42) are set to frequencies close to (fr1-fr2)/2, a lower local configuration is formed in the first system and an upper local configuration is formed in the second system using the frequency lower than that of the first system. In addition, here, ft1, f11, fr1, and f41 are transmission frequency, transmission intermediate frequency, reception frequency, and reception intermediate frequency in the first system, respectively. Similarly, ft2, f12, fr2, and f42 are transmission frequency, transmission intermediate frequency, reception frequency, and reception intermediate frequency in the second system, respectively.

## Description

### Technical Field

The present invention relates to a radio communication apparatus and a radio communication method capable of sharing a frequency band, which is a different system from CDMA (Code Division Multiple Access).

### Background Art

Conventionally, there are radio communication apparatuses and radio communication methods that can perform transmission and reception in two or more mobile communication systems each using a different frequency band.

For example, in an apparatus described in Unexamined Japanese Patent Publication HEI No. 9-233143 (Digital radio communication apparatus), a frequency difference between a reception intermediate frequency signal and a transmission intermediate frequency signal is set to be a frequency for received frequency and a transmitted frequency, and a frequency division of a local signal is set in modulator/demodulator such that a frequency corresponding to integral times of reception intermediate frequency becomes integral times of transmitted intermediate frequency, whereby making it possible to deal with mobile communication systems using a plurality of different frequency bands.

However, in the conventional apparatus, the frequency setting range of a frequency synthesizer and the like is generally about several tens of HMz. In the case of using such an apparatus in the mobile communication systems each having a different frequency, a using frequency band must be switched by use of frequency switching means for switching generators such as a transmission and/or reception intermediate frequency synthesizer and radio frequency synthesizer.

### Disclosure of Invention

It is an object of the present invention is to improve miniaturization of an apparatus by sharing a transmitting mixer and a receiving mixer in mobile communication systems each using a different frequency band without using frequency switching means for frequency synthesizers.

According to one aspect of the present invention, there is provided a radio communication apparatus used in a plurality of mobile communication systems each using a different frequency, comprising quadrature modulating means for quadrature modulating a transmission signal for one of two mobile communication systems selected from among the plurality of mobile communication systems using a first transmission intermediate frequency obtained from a difference between a transmission local frequency shared between the selected two mobile communication systems and a first transmission frequency used in one of the selected two mobile communication systems, and for quadrature modulating a transmission signal for the other mobile communication system using a second transmission intermediate frequency obtained from a difference between the transmission local frequency and a second transmission frequency used in the other mobile communication system; first frequency converting means for frequency converting the quadrature modulated transmission signal for one system to the first transmission frequency using the transmission local frequency and for frequency converting the quadrature modulated transmission signal for the other system to the second transmission frequency using the transmission local frequency; second frequency converting means for frequency converting a received signal for one system from a first reception frequency used in one system to a reception local frequency shared between the selected two mobile communication systems, and for frequency converting a received signal for the other system from a second reception frequency used in the other system to the reception local frequency; and
quadrature detecting means for quadrature detecting the received signal for one system subjected to frequency conversion by the second frequency converting means using a first reception intermediate frequency obtained from a difference between the reception local frequency and the first reception frequency, and for quadrature detecting the received signal for the other system subjected to frequency conversion by the second frequency converting means using a second reception intermediate frequency obtained from a difference between the reception local frequency and the second reception frequency.

### Brief Description of Drawings

FIG. 1 is a block diagram illustrating the configuration of a radio communication apparatus according to Embodiment 1 of the present invention;
FIG. 2 is a block diagram illustrating the configuration of a radio communication apparatus according to Embodiment 2 of the present invention;
FIG. 3 is a block diagram illustrating the configuration of a radio communication apparatus according to Embodiment 3 of the present invention; and
FIG. 4 is a block diagram illustrating the configuration of a radio communication apparatus according to Embodiment 2 of the present invention.

### Best Mode for Carrying Out the Invention

The outline of the present invention is to share a transmitting mixer and a receiving mixer in mobile communication systems each using a different frequency band without using frequency switching means for frequency synthesizers.

### (Embodiment 1)

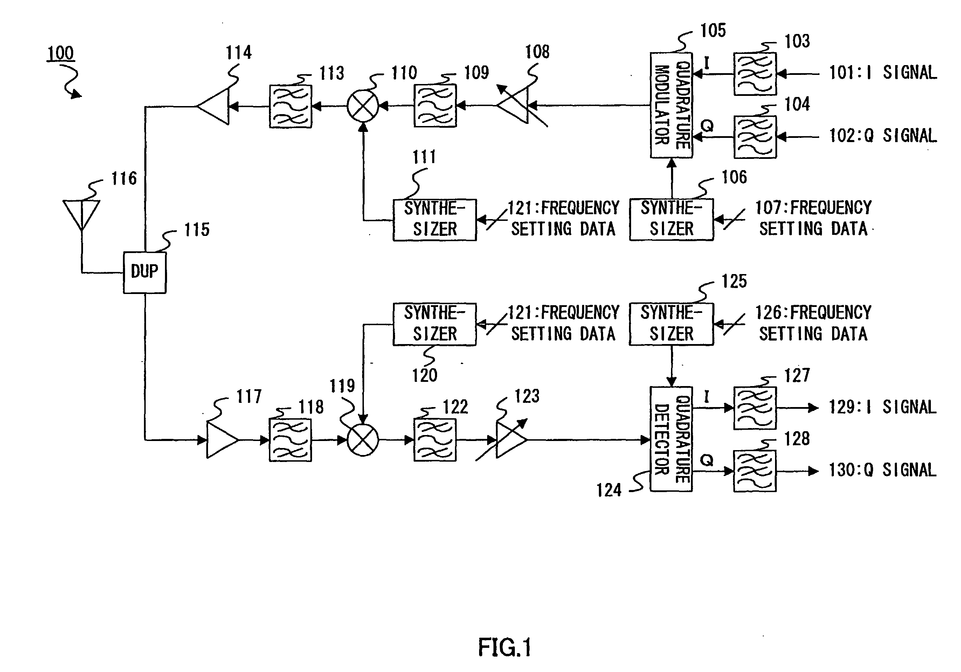

FIG. 1 is a block diagram illustrating the configuration of a radio communication apparatus according to Embodiment 1 of the present invention. In the same figure, a radio communication apparatus 100 is used in a mobile station apparatus and a base station apparatus in a plurality of digital mobile communication systems each using a different frequency band.

The respective components used at a data transmitting time will be explained.

Each of first low-pass filters 103 and 104 outputs a first low-pass filter output from each of input I signal 101 and Q signal 102.

A quadrature modulator 105 (quadrature modulating means) outputs a quadrature modulation output from the input first low-pass output. Moreover, a first frequency synthesizer 106 outputs a first frequency synthesizer output to the quadrature modulator 105 based on frequency setting data 107. A first gain control amplifier 108 outputs a first gain control output from the input quadrature modulation output, and inputs it to a first filter 109.

An up-mixer 110 (first frequency converting means) outputs an up-mixer output from a first filter output sent from the first filter 109. Moreover, a second synthesizer 111 (first frequency generating means) outputs the second frequency synthesizer output to the up-mixer 110 based on frequency setting data 112. A second filter 113 outputs a second filter output to a power amplifier 114 from the input up-mixer output. The power amplifier 114 outputs a power amplifier output to an antenna duplexer 115 from the input second filter output. An antenna 116 transmits a transmission signal based on an output from the antenna duplexer 115.

An explanation will be next given of the respective components used at a data receiving time.

A low noise amplifier 117 inputs a low noise amplifier output to a third filter 118 based on the output from the antenna duplexer 115. The third filter 118 inputs a third filter output to one input side of a down-mixer 119 ( second frequency converting means) from the input low noise amplifier output. A third frequency synthesizer output, which is based on frequency setting data 121, is input to the other input side of the down-mixer 119 from a third frequency synthesizer 120 (second frequency generating means). A fourth filter 122 outputs a fourth filter output from a mixer output sent from the down-mixer 119. A second gain control amplifier 123 outputs a second gain control output from the input fourth filter output. A quadrature detector (quadrature detecting means) 124 outputs I signal 129 and Q signal 130 from the second gain control output sent from the second gain control amplifier 123 and a fourth frequency synthesizer output, which is based on frequency setting data 126 sent from a fourth frequency synthesizer 125, through second low-pass filters 127 and 128, respectively.

In the aforementioned configuration, it is assumed that a transmission frequency and a reception frequency in the mobile communication system using a first frequency band (hereinafter referred to as "first system") are ft1 and fr2, respectively. Moreover, it is assumed that the frequency of first frequency synthesizer 106, that of second frequency synthesizer 111, that of third frequency synthesizer 120 and that of fourth frequency synthesizer 125 are f11, f21, f31, and f41, respectively.

While, in a second system, which is a mobile communication system using a frequency band different from that of the first system, it is assumed that a transmission frequency, reception frequency, frequency of first frequency synthesizer 106, that of second frequency synthesizer 111, that of third frequency synthesizer 120, and that of fourth frequency synthesizer 125 are ft2, fr2, f12, f22, f32, and f42, respectively. Moreover, it is assumed that ft1>ft2, fr1>fr2, fr1>ft1, and fr2>ft2 are established.

The following will explain the actions performed at a data transmitting time when the radio communication apparatus 100 is used in the first and second systems.

In the first system, I signal 101 and Q signal 102 transmitted at the transmitting side are low-pass filtered by first low-pass filters 103 and 104, respectively. Then, the resultant is quadrature modulated to transmission IF frequency f11 (transmission intermediate frequency) by the quadrature modulator 105 using frequency f11 generated from the first frequency synthesizer 106 according to frequency setting data 107.

The signal subjected to quadrature modulation is amplified by the first gain control amplifier 108 according to control voltage, and only a predetermined band of the amplified signal is filtered by the first filter 109. Thereafter, the resultant is frequency converted to transmission frequency ft1 (ft1 = f21 +f11) using a transmission local signal of frequency f21 generated from the second frequency synthesizer 111 according to frequency setting data 112 at the up-mixer 110. In this way, the case in which the frequency of local signal is lower than the transmission (reception) frequency is hereinafter referred to as a lower local configuration.

Only a predetermined band of this converted signal is filtered by the second filter 113, and the resultant is amplified by the power amplifier 114. Thereafter,thetransmission/receptionfrequencyis separated by the antenna duplexer 115, and the resultant is radio transmitted from the antenna 116.

While, in the second system, I signal 101 and Q signal 102 transmitted at the transmitting side are low-pass filtered by first low-pass filters 103 and 104, respectively. Then, the resultant is quadrature modulated to transmission IF frequency f12 (transmission intermediate frequency) by the quadrature modulator 105 using frequency f12 generated from the first frequency synthesizer 106 according to frequency setting data 107.

The signal subjected to quadrature modulation is amplified by the first gain control amplifier 108 according to control voltage, and only a predetermined band of the amplified signal is filtered by the first filter 109. Thereafter, the resultant is frequency converted to transmission frequency ft2 (ft2 = f22 - f12) using a transmission local signal of frequency f22 generated from the second frequency synthesizer 111 according to frequency setting data 112 at the up-mixer 110. In this way, the case in which the frequency of local signal is higher than the transmission (reception) frequency is hereinafter referred to as an upper local configuration.

Only a predetermined band of this converted signal is filtered by the second filter 113, and the resultant is amplified by the power amplifier 114. Thereafter, the transmitted/received frequency is separated by the antenna duplexer 115, and the resultant is radio transmitted from the antenna 116.

The following will explain the actions performed at a data receiving time when the radio communication apparatus 100 is used in the first and second systems.

In the first system, regarding a modulated signal received by the antenna 116, the transmission/reception frequency is separated by the antenna duplexer 115 and the resultant is low-noise amplified by the low noise amplifier 117, and the signal subjected to low amplification is filtered in its only predetermined band by the third filter 118. The signal filtered in its only predetermined band by the third filter 118 is frequency converted to reception IF frequency f41 (f41 = fr1 - f31) using a reception local signal of frequency f31 generated from the third frequency synthesizer 120 according to frequency setting data 121 at the down-mixer 119 so as to form the lower local configuration.

Only a predetermined band of this converted signal is filtered by the fourth filter 122, and the resultant is amplified by the second gain control amplifier 123, which is subjected to gain control according to control voltage. The amplified signal is quadrature detected by the quadrature detector 124 using a signal of frequency f41 generated from the fourth frequency synthesizer 125 according to frequency setting data 126, and demodulated to I signal and Q signal. The demodulated signals are low-pass filtered by the second low-pass filters 127 and 128, so that I signal 129 and Q signal 130 are output, respectively.

While, in the second system, regarding a modulated signal received by the antenna 116, the transmission/reception frequency is separated by the antenna duplexer 115 and the resultant is low-noise amplified by the low noise amplifier 117, and the signal subjected to low amplification is filtered in its only predetermined band by the third filter 118. The signal filtered in its only predetermined band by the third filter 118 is frequency converted to reception IF frequency f42 (f42 = f32 - fr2) using a reception local signal of frequency f32 generated from the third frequency synthesizer 120 according to frequency setting data 121 at the down-mixer 119 so as to form the upper local configuration.

Only a predetermined band of this converted signal is filtered by the fourth filter 122, and the resultant is amplified by the second gain control amplifier 123, which is subjected to gain control according to control voltage. The amplified signal is quadrature detected by the quadrature detector 124 using a signal of frequency f42 generated from the fourth frequency synthesizer 125 according to frequency setting data 126, and demodulated to I signal and Q signal. The demodulated signals are low-pass filtered by the second low-pass filters 127 and 128, so that I signal 129 and Q signal 130 are output, respectively.

Here, at the transmitting side, in order that transmission IF frequency f11 of the first system and transmission IF frequency f12 of the second system are used in common (f11=f12) so that frequency f21 of the second frequency synthesizer 111 and frequency f22 thereof are substantially equal to each other, values of f11 and f12 (f11=f12) are set to frequencies close to (ft1-ft2)/2. Then, the lower local configuration is formed in the first system and the upper local configuration is formed in the second system using the frequency lower than that of the first system. This makes it possible to substantially equalize f21 and f22, which are frequencies of transmission local signal. This also makes it possible to set the frequency of first frequency synthesizer 106 to fixed frequency ftIF=f11=f12. Moreover, it is possible to set the frequency of transmission local signal from the second frequency synthesizer 111 to substantially an equal frequency in any frequency band of the first and second systems.

While, at the receiving side, in order that reception IF frequency f41 of the first system and reception IF frequency f42 of the second system are used in common (f41=f42) so that frequency f31 of the third frequency synthesizer 120 and frequency f32 thereof are substantially equal to each other, values of f41 and f42 (f41=f42) are set to frequencies close to (fr1-fr2)/2. The lower local configuration is formed in the first system and the upper local configuration is formed in the second system using the frequency lower than that of the first system. This makes it possible to substantially equalize f41 and f42, which are frequencies of reception local signal. This also makes it possible to set the frequency of fourth frequency synthesizer 125 to fixed frequency frIF=f41=f42. Moreover, it is possible to set the frequency of transmission local signal from the third frequency synthesizer 120 to substantially an equal frequency in any frequency band of the first and second systems.

In this way, according to the radio communication apparatus of this embodiment, in two mobile communication systems using two different frequencies, transmission IF frequency and reception IF frequency can be fixed and shared in either frequency band. Moreover, the up-mixer and down-mixer are formed to have lower local configuration and upper local configuration. Resultantly, it is possible to switch the frequency to be used in two mobile communication systems without switching the generated frequency bands of second frequency synthesizer 111 and third frequency synthesizer 120. This makes it possible for the first frequency synthesizer 106 and fourth frequency synthesizer 125 to reduce power consumption. This also makes it possible to reduce circuits for switching the generated frequency bands of second frequency synthesizer 111 and third frequency synthesizer 120 and to improve miniaturization of the apparatus.

### (Embodiment 2)

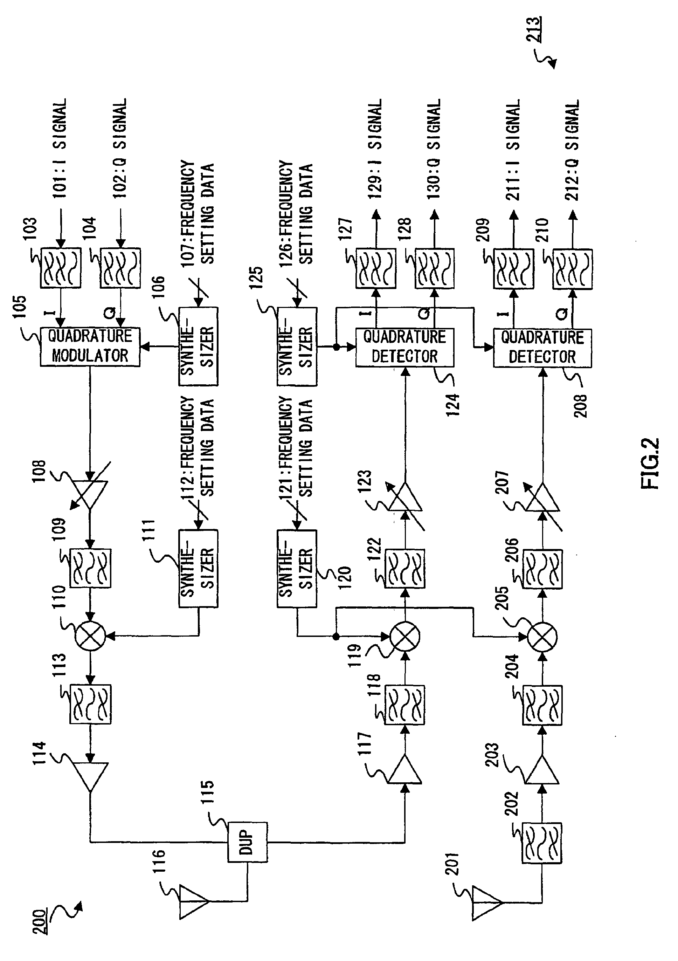

FIG. 2 is a block diagram illustrating the configuration of a radio communication apparatus according to Embodiment 2 of the present invention. In the same figure, a radio communication apparatus 200 is used in the mobile station apparatus and base station apparatus in a plurality of digital mobile communication systems each using a different frequency band. Regarding the same components as those of the radio communication apparatus 100 shown in FIG. 1, the same reference numerals as those of FIG. 1 are added to the corresponding components of the radio communication apparatus 200 show in FIG. 2, and the specific explanation is omitted.

The radio communication apparatus 200 in the same figure comprises a receiving circuit 213 including an antenna 201, fifth filter 202, second low-noise amplifier 203, sixth filter 204, down-mixer 205, seventh filter 206, third gain control amplifier 207, quadrature detector 208, and third low-pass filters 209 and 210 in addition to the components of radio communication apparatus 100 of Embodiment 1. The down-mixer 205 is connected to the third frequency synthesizer 120, and quadrature detector 208 is connected to the fourth frequency synthesizer 125, so that diversity reception can be performed by the receiving circuit 213.

In the aforementioned configuration, the receiving circuit 213 operates to havemaximal- ratio combining diversity configuration with the same frequency reception. The other actions are the same as those of Embodiment 1. According to the above radio communication apparatus 200, since the receiving circuit 213 is provided to perform diversity reception in addition to the components of Embodiment 1, it is possible to improve receiving characteristics in addition to the effect of Embodiment 1.

### (Embodiment 3)

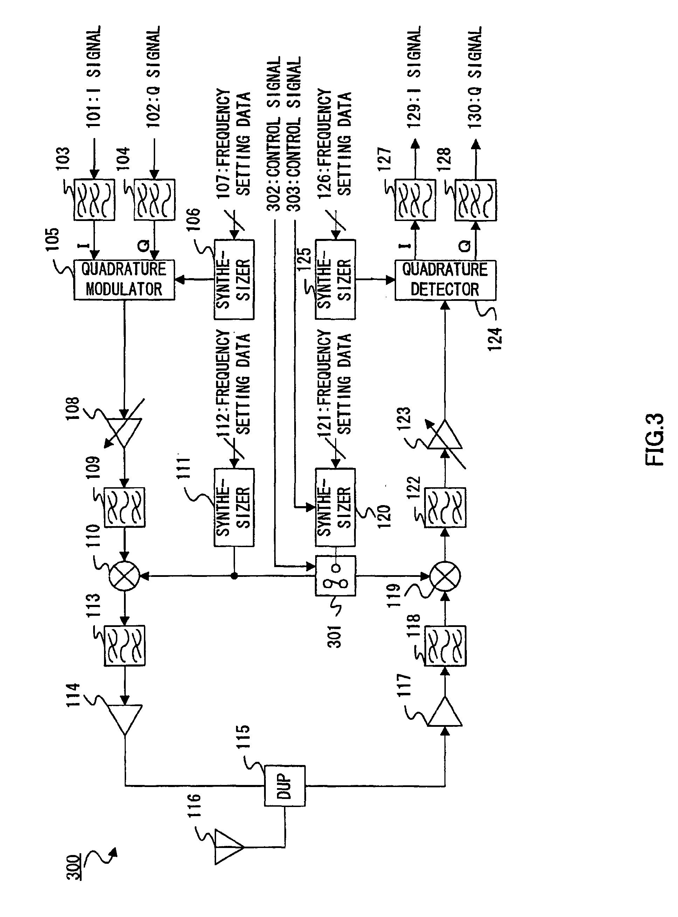

FIG. 3 is a block diagram illustrating the configuration of a radio communication apparatus according to Embodiment 3 of the present invention. In the same figure, a radio communication apparatus 300 is used in the mobile station apparatus and base station apparatus in a plurality of digital mobile communication systems each using a different frequency band. Regarding the same components as those of the radio communication apparatus 100 shown in FIG. 1, the same reference numerals as those of FIG. 1 are added to the corresponding components of the radio communication apparatus 300 show in FIG. 3, and the specific explanation is omitted.

The radio communication apparatus 300 in the same figure comprises a switch 301 (connection selecting means) that performs selection using a control signal 302. The second frequency synthesizer 111 and down-mixer 119 are connected to each other via the switch 301 at a data receiving time in the frequency band of first system. For this reason, a signal filtered in its only predetermined band by the third filter 118 is frequency converted to reception IF frequency f41 (f41 = fr1 - f21) using a local signal of frequency f21 generated from the second frequency synthesizer 111 so as to form the upper local configuration.

Moreover, the third frequency synthesizer 120 and down-mixer 119 are connected to each other via the switch 301 at a data receiving time in the frequency band of second system. For this reason, a signal filtered in its only predetermined band by the third filter 118 is frequency converted to reception IF frequency f42 (f42 = f32 - fr2) using a local signal of frequency 32 generated from the third frequency synthesizer 120 so as to form the lower local configuration.

In this way, according to the radio communication apparatus of this embodiment, in two mobile communication systems using two different frequencies, transmission IF frequency and reception IF frequency can be fixed and shared in either frequency band. Moreover, the up-mixer and down-mixer are formed to have lower local configuration and upper local configuration. Resultantly, it is possible to switch the frequency to be used in two mobile communication systems without switching the generated frequency bands of second frequency synthesizer 111 and third frequency synthesizer 120. This makes it possible to reduce circuits for switching the generated frequency bands of second frequency synthesizer 111 and third frequency synthesizer 120 and to improve miniaturization of the apparatus.

Moreover, at the data receiving time of first system, since the third frequency synthesizer is not operated using the local signal generated by the second frequency synthesizer 111, power consumption can be further reduced.

Still moreover, at the data transmitting time of first system, the third frequency synthesizer 120 and down-mixer 119 are connected to each other via the switch 301, so that data reception such as reception level measurement, etc., in the second system can be performed at the same time.

In addition, this embodiment provides the configuration in which the third frequency synthesizer 120 and down-mixer 119 are connected to each other via the switch 301. However, the present invention is not limited to this. The second frequency synthesizer 111 and up-mixer 110 are connected to each other via the switch, so that the signal of frequency f31 may be used as a local signal at the transmitting time in the first system, and the signal of frequency f22 may be used as a local signal at the receiving time in the second system.

### (Embodiment 4)

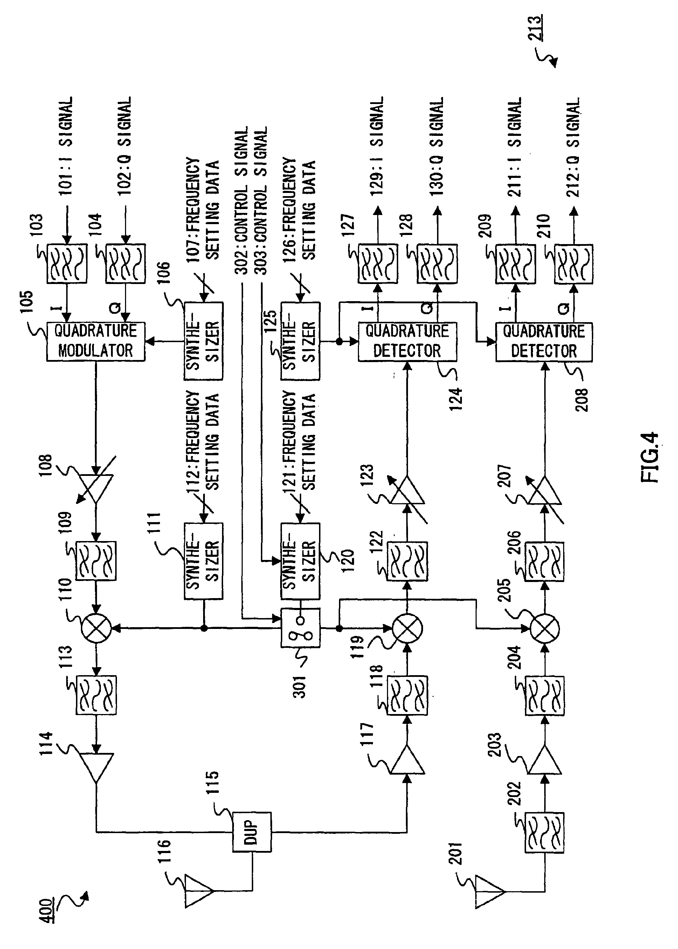

FIG. 4 is a block diagram illustrating the configuration of a radio communication apparatus according to Embodiment 4 of the present invention. In the same figure, a radio communication apparatus 400 is used in the mobile station apparatus and base station apparatus in a plurality of digital mobile communication systems each using a different frequency band. Regarding the same components as those of the radio communication apparatus 300 shown in FIG. 3, the same reference numerals as those of FIG. 3 are added to the corresponding components of the radio communication apparatus 400 show in FIG. 4, and the specific explanation is omitted.

The radio communication apparatus 400 in the same figure comprises a receiving circuit 213 including antenna 201, fifth filter 202, second low noise amplifier 203, sixth filter 204, down-mixer 205, seventh filter 206, third gain control amplifier 207, quadrature detector 208, and third low-pass filters 209 and 210 in addition to the components of radio communication apparatus 300 of Embodiment 3. The down-mixer 205 is connected to the third frequency synthesizer 120, and quadrature detector 208 is connected to the fourth frequency synthesizer 125, so that diversity reception can be performed by the receiving circuit 213.

In the aforementioned configuration, the receiving circuit 213 operates to have maximal- ratio combining diversity configuration with the same frequency reception. The other actions are the same as those of Embodiment 3. According to the above radio communication apparatus 400, since the receiving circuit 213 is provided to perform diversity reception in addition to the components of Embodiment 3, it is possible to improve receiving characteristics in addition to the effect of Embodiment 3.

As mentioned above, according to the present invention, there can be provided a radio communication apparatus and a radio communication method in which a transmission mixer and reception mixer are shared without using frequency band switching means for frequency synthesizers to make it possible to improve miniaturization of the apparatus.

This application is based on the Japanese Patent Application No.2000-222435 filed on July 24, 2000, entire content of which is expressly incorporated by reference herein.

### Industrial Applicability

The present invention can be applied to a radio communication apparatus and a radio communication method capable of sharing a frequency band, which is a different system from CDMA (Code Division Multiple Access).

## Claims

1. A radio communication apparatus used in a plurality of communication systems each using a different frequency, comprising:
quadrature modulating means for quadrature modulating a transmission signal for one of two mobile communication systems selected from among said plurality of mobile communication systems using a first transmission intermediate frequency obtained from a difference between a transmission local frequency shared between said selected two mobile communication systems and a first transmission frequency used in one of said selected two mobile communication systems, and for quadrature modulating a transmission signal for the other mobile communication system using a second transmission intermediate frequency obtained from a difference between said transmission local frequency and a second transmission frequency used in said other mobile communication system;
first frequency converting means for frequency converting said quadrature modulated transmission signal for said one system to said first transmission frequency using said transmission local frequency and for frequency converting said quadrature modulated transmission signal for said other system to said second transmission frequency using said transmission local frequency;
second frequency converting means for frequency converting a received signal for said one system from a first reception frequency used in said one system to a reception local frequency shared between said selected two mobile communication systems, and for frequency converting a received signal for said other system from a second reception frequency used in said other system to said reception local frequency; and
quadrature detecting means for quadrature detecting said received signal for said one system subjected to frequency conversion by said second frequency converting means using a first reception intermediate frequency obtained from a difference between said reception local frequency and said first reception frequency, and for quadrature detecting said received signal for said other system subjected to frequency conversion by said second frequency converting means using a second reception intermediate frequency obtained from a difference between said reception local frequency and said second reception frequency.

2. A radio communication apparatus used in a plurality of mobile communication systems each using a different frequency, comprising:
quadrature modulating means for quadrature modulating a transmission signal for one of two mobile communication systems selected from among said plurality of mobile communication systems using a first transmission intermediate frequency obtained from a difference between a transmission local frequency shared between said selected two mobile communication systems and a first transmission frequency used in one of said selected two mobile communication systems, and for quadrature modulating a transmission signal for the other mobile communication system using a second transmission intermediate frequency obtained from a difference between said transmission local frequency and a second transmission frequency used in said other mobile communication system; and
first frequency converting means for frequency converting said quadrature modulated transmission signal for said one system to said first transmission frequency using said transmission local frequency, and for frequency converting said quadrature modulated transmission signal for said other system to said second transmission frequency using said transmission local frequency.

3. A radio communication apparatus used in a plurality of mobile communication systems each using a different frequency, comprising:
second frequency converting means for frequency converting a received signal for one of said two mobile communication system selected from among said plurality of mobile communication systems from a first reception frequency used in said one system to a reception local frequency shared between said selected two mobile communication systems, and for frequency converting a received signal for said other system from a second reception frequency used in said other system to said reception local frequency; and
quadrature detecting means for quadrature detecting said received signal for one system subjected to frequency conversion by said second frequency converting means using a first reception intermediate frequency obtained from a difference between said reception local frequency and said first reception frequency, and for quadrature detecting said received signal for said other system subjected to frequency conversion by said second frequency converting means using a second reception intermediate frequency obtained from a difference between said reception local frequency and said second reception frequency.

4. The radio communication apparatus according to claim 1, further comprising:
a plurality of receiving means for receiving signals radio transmitted;
said second frequency converting means whose quantity is the same as that of said plurality of receiving means; and
said quadrature detecting means whose quantity is the same as that of said plurality of receiving means,
wherein said plurality of receiving means performs diversity reception.

5. The radio communication apparatus according to claim 1, further comprising:
first frequency generating means for generating said transmission local frequency;
second frequency generating means for generating said reception local frequency; and
connection selecting means for selectively connecting said first frequency converting means to said first frequency generating means or said second frequency generating means,
wherein said connection selecting means connects said first frequency converting means to said second frequency generating means at a transmitting time in said one system, and connects said first frequency converting means to said first frequency generating means at a transmitting time in said other system.

6. The radio communication apparatus according to claim 1, further comprising:
first frequency generating means for generating said transmission local frequency;
second frequency generating means for generating said reception local frequency; and
connection selecting means for selectively connecting said first frequency converting means to said first frequency generating means or said second frequency generating means,
wherein said connection selecting means connects said second frequency converting means to said first frequency generating means at a receiving time in said one system, and connects said second frequency converting means to said second frequency generating means at a receiving time in said other system.

7. A mobile station apparatus having the radio communication apparatus described in claim 1.

8. A base station apparatus having the radio communication apparatus described in claim 1.

9. A radio communication method used in a plurality of mobile communication systems each having a different frequency, comprising the steps of:
quadrature modulating a transmission signal for one of two mobile communication systems selected from among said plurality of mobile communication systems using a first transmission intermediate frequency obtained from a difference between a transmission local frequency shared between said selected two mobile communication systems and a first transmission frequency used in one of said selected two mobile communication systems;
quadrature modulating a transmission signal for the other mobile communication system using a second transmission intermediate frequency obtained from a difference between said transmission local frequency and a second transmission frequency used in said other mobile communication system;
frequency converting said quadrature modulated transmission signal for said one system to said first transmission frequency using said transmission local frequency; and
frequency converting said quadrature modulated transmission signal for said other system to said second transmission frequency using said transmission local frequency.

10. A radio communication method used in a plurality of mobile communication systems each having a different frequency, comprising the steps of:
frequency converting a received signal for one of two mobile communication systems selected from among said plurality of mobile communication systems to a reception local frequency shared between said selected two mobile communication systems;
frequency converting a second reception frequency used in said other system to said reception local frequency;
quadrature detecting said received signal for said one system subjected to frequency conversion by said frequency converting step using a first reception intermediate frequency obtained from a difference between said reception local frequency and said first reception frequency; and
quadrature detecting said received signal for said other system subjected to frequency conversion by said frequency converting step using a second reception intermediate frequency obtained from a difference between said reception local frequency and said second reception frequency.
